# EUROPÄISCHE PATENTSCHRIFT

(11) **EP 0 912 357 B1**
(45) Veröffentlichungstag und Bekanntmachung des Hinweises auf die Patenterteilung: **24.04.2002**
(21) Anmeldenummer: 97939996.1
(22) Anmeldetag: 14.07.1997
(51) Int. Cl.: B60H 1/24, B60R 21/16

(54) **ZWANGSENTLÜFTUNG FÜR KRAFTFAHRZEUGE**
FORCED VENTILATION SYSTEM FOR MOTOR VEHICLES
SYSTEME DE VENTILATION FORCEE POUR AUTOMOBILES

(30) Priorität: 19.07.1996 DE 19629115
(43) Veröffentlichungstag der Anmeldung: 06.05.1999
(73) Patentinhaber: WEGU Gummi- und Kunststoffwerke GmbH & Co. KG, D-34123 Kassel (DE)
(72) Erfinder: DIETZ, Michael, D-34613 Schwalmstadt (DE); THORSTEN, Hildebrand, D-34281 Gudensberg (DE); HEIDEL, Joachim, D-34132 Kassel (DE)
(74) Vertreter: Patentanwälte Rehberg + Hüppe
(86) Internationale Anmeldenummer: EP9703760
(87) Internationale Veröffentlichungsnummer: WO9803363

(56) Entgegenhaltungen:
- EP-A- 0 337 071
- EP-A- 0 467 095
- EP-A- 0 728 606
- DE-A- 4 434 136
- DE-C- 4 322 213
- US-A- 5 105 849
- US-A- 5 194 038
- US-A- 5 355 910

## Beschreibung

Die Erfindung bezieht sich auf ein Verfahren zur Herstellung einer Zwangsentlüftung für den Druckausgleich zwischen dem Innenraum und der Umgebung eines Kraftfahrzeugs, mit den Merkmalen des Oberbegriffs des Patentanspruchs 1. Weiterhin bezieht sich die Erfindung auf eine Zwangsentlüftung mit den Merkmalen des Oberbegriffs des Patentanspruchs 6.

Bei dem Kraftfahrzeug ist der Rahmen der Zwangsentlüftung in einer Durchbrechung der Karosserie angeordnet, wobei in der Regel eine umlaufende Dichtlippe für einen dichten Anschluß des Rahmens an die Karosserie sorgt.

Die Aufgabe einer solchen Zwangsentlüftung besteht darin, einen Druckaufbau im Innenraum des Kraftfahrzeugs zu vermeiden. Ein solcher Druckaufbau kann hervorgerufen werden durch die Lüftung des fahrenden Kraftfahrzeugs, ein laufendes Gebläse bei stehendem Kraftfahrzeug, das Zuschlagen der Türen des Kraftfahrzeugs oder auch durch das Aufblasen des Airbags des Kraftfahrzeugs. Eine Zwangsentlüftung sorgt in allen diesen Fällen dafür, daß ein Druckausgleich zwischen dem Innenraum und der Umgebung des Kraftfahrzeugs erfolgt, so daß durch die Belüftung bzw. das laufende Gebläse überhaupt frische Luft in das Kraftfahrzeug eingebracht werden kann, ein Schließen der Tür nicht durch den Gegendruck im Kraftfahrzeug behindert wird und beim explosionsartigen Aufblasen des Airbags keine gesundheitsgefährdenden Druckspitzen auftreten.

Eine bekannte Zwangsentlüftung mit einem eine Öffnung begrenzenden Rahmen aus hartem Kunststoff und einer die Öffnung in einer Geschlossenstellung verschließenden ebenen Lüftungsklappe aus einem Elastomerwerkstoff weist drei Bauteile auf, die zunächst getrennt von einander hergestellt und anschließend zusammengebaut werden, bevor ihre gemeinsame Installation an dem Kraftfahrzeug erfolgt. Hierbei handelt es sich um den Rahmen aus dem harten Kunststoff, die Lüftungsklappe aus dem Elastomerwerkstoff und eine Dichtung aus einem Schaumstoff. Die Befestigung der Lüftungsklappe und der Dichtung an dem Rahmen ist aufwendig und fehlerbehaftet, weil genau definierte Bedingungen eingehalten werden müssen, damit die Lüftungsklappe mit einer geringen, aber definierten Rückstellkraft in ihre die Öffnung in dem Rahmen verschließende Geschlossenstellung beaufschlagt wird. Diese Rückstellkraft ist wichtig, damit keine Abgase oder unerwünschte Kaltluft über die Zwangsentlüftung in den Innenraum des Kraftfahrzeugs eindringen. Dies gilt insbesondere bei stehendem Kraftfahrzeug, wenn keine Belüftung des Innenraums durch die Fahrtbewegung erfolgt. Gleichzeitig darf die Rückstellkraft aber nicht zu groß sein, damit sie nicht den erwünschten Druckausgleich zwischen dem Innenraum und der Umgebung des Kraftfahrzeugs behindert.

Bei einer anderen bekannten Zwangsentlüftung mit einem eine Öffnung begrenzenden Rahmen aus hartem Kunststoff und einer die Öffnung in einer Geschlossenstellung verschließenden ebenen Lüftungsklappe aus einem Elastomerwerkstoff ist eine umlaufende Dichtlippe aus einem Elastomerwerkstoff auf der der Lüftungsklappe gegenüber liegenden Seite an dem Rahmen angespritzt. Hierdurch entfällt zwar der Montageaufwand für die Dichtung. Die schwierigere Montage der Lüftungsklappe muß jedoch weiterhin in einem separaten Schritt nach deren Herstellung vorgenommen werden.

Ein Verfahren zur Herstellung einer Zwangsentlüftung mit den Merkmalen des Oberbegriffs des Patentanspruchs 1 und eine Zwangsentlüftung mit den Merkmalen des Oberbegriffs des Patentanspruchs 6 sind aus der US-A-5 194 038 bekannt. Hier wird die Lüftklappe in einer Fertigungsstellung hinter der nicht unterteilten Öffnung an den Rahmen angespritzt und dann durch die Öffnung hindurch in ihre Funktionsstellung vor der Öffnung gebracht.

Der Erfindung liegt die Aufgabe zugrunde, ein Verfahren zur Herstellung einer Zwangsentlüftung, das mit besonders geringem Aufwand zu einer einbaufertigen Zwangsentlüftung für den Einbau in das Kraftfahrzeug führt, und eine Zwangsentlüftung, die nach dem neuen Verfahren vorteilhaft herstellbar ist, aufzuzeigen.

Erfindungsgemäß wird diese Aufgabe durch das Verfahren nach Patentanspruch 1 und die Zwangsentlüftung des Patentanspruchs 6 gelöst, wobei vorteilhafte Ausführungsformen des Verfahrens und der Zwangsentlüftung in den Unteransprüchen 2 bis 5 bzw. 7 bis 12 definiert sind.

Daß die erfindungsgemäße einfache und herstellungsgünstige Ausbildung der Zwangsentlüftung überhaupt möglich ist, überrascht den Fachmann, weil die Lüftungsklappe in ihrer Geschlossenstellung an dem Rahmen anliegt und deshalb in der Geschlossenstellung nicht an den Rahmen angespritzt werden kann. Das Anspritzen der Lüftungsklappe an den Rahmen in einer Offenstellung führt demgegenüber zu Schwierigkeiten bezüglich der gewünschten elastischen Rückstellkraft, die die Lüftungsklappe in ihre Geschlossenstellung beaufschlagen soll, weil normalerweise eine elastische Rückstellkraft überwunden werden müßte, um die in einer Offenstellung an den Rahmen angespritzte Lüftungsklappe in ihre Geschlossenstellung zu bringen. Diese elastische Rückstellkraft würde dabei genau mit der entgegengesetzten Richtung wirken, wie sie eigentlich gewünscht ist. Im folgenden wird jedoch ein Weg beschrieben werden, wie eine an den Rahmen angespritzte Lüftungsklappe erhalten werden kann, bei der die elastische Rückstellkraft dem Öffnen der Lüftungsklappe aus einer Geschlossenstellung entgegenwirkt. Unter einer elastischen Rückstellkraft ist immer eine Federkraft zu verstehen, die von dem Elastomerwerkstoff ausgeht, aus dem auch die Lüftungsklappe ausgebildet ist. Diese Federkraft muß nicht mit fortschreitender Öffnung linear anwachsen, sie zeigt aber in der Regel einen Anstieg mit fortschreitender Öffnung der Lüftungsklappe.

Vorzugsweise weist die Lüftungsklappe eine parallel zu dem Kontaktbereich mit dem Rahmen verlaufende Nut auf, die sich über die gesamte Breite der Lüftungsklappe erstreckt. Diese Nut definiert ein Klappgelenk, um das abklappend sich die Lüftungsklappe öffnet. Durch das Klappgelenk wächst der bei auftretenden Druckunterschieden zwischen dem Innenraum und der Umgebung des Kraftfahrzeugs durch die Klappe freigegebene Teil der Öffnung in dem Rahmen deutlich schneller an als bei einer sich beispielsweise aufbiegenden Klappe aus einem Elastomerwerkstoff. Auf diese Weise wird bei der neuen Zwangsentlüftung ein schnellerer Druckausgleich erreicht.

Auf dieses Öffnungsverhalten abgestimmt, beträgt die Dicke der Lüftungsklappe 1,0 bis 2,5 mm, d. h. vorzugsweise 1,5 bis 2 mm. Diese Dicke ist ausreichend, damit sich die Lüftungsklappe beim Öffnen nicht nennenswert selbst verformt, sondern um die Klappachse aufklappt.

Die Restdicke der Lüftungsklappe am Grund der Nut beträgt vorzugsweise 0,3 bis 0,8 mm und ist damit vergleichsweise gering, so daß die Verformung des Elastomerwerkstoffs am Grund der Nut viel geringere Kräfte erfordert als in der Fläche der Lüftungsklappe. Auch hierdurch wird ein Aufklappen der Lüftungsklappe um die Klappachse gegenüber einer Verformung der Lüftungsklappe gefördert.

In der bevorzugten Ausführungsform ist die Lüftungsklappe in der Geschlossenstellung um 5 bis 20 ° aus der Vertikalen verkippt und liegt von dem Kontaktbereich an dem Rahmen herabhängend auf Streben auf, die als Bestandteile des Rahmens die Öffnung unterteilen. Durch die Verkippung der Lüftungsklappe aus der Vertikalen wird die Lüftungsklappe auch durch die um ihre Klappachse wirkende Gewichtskraft in die Geschlossenstellung beaufschlagt. Die Auflage der Lüftungsklappe auf den Streben stellt sicher, daß die Lüftungsklappe bei von außen wirkenden Luftstößen nicht in Richtung auf den Innenraum des Kraftfahrzeugs, d. h. entgegen ihrer vorgesehenen Öffnungsrichtung durch die Öffnung in dem Rahmen hindurchgedrückt wird. Im übrigen kann durch die Streben auch sicher gestellt werden, daß keine Tiere durch die Zwangsentlüftung in den Innenraum des Kraftfahrzeugs eindringen können, auch wenn sie die Lüftungsklappe anzuheben vermögen.

Insbesondere wenn die Lüftungsklappe in ihrer Geschlossenstellung gegenüber der Vertikalen abgekippt ist und entsprechend aufgekippte Auflageflächen benötigt, kann es aus herstellungstechnischen Gründen sinnvoll sein, daß der Rahmen im Bereich mindestens einer zur Verankerung des Rahmens an der Karosserie des Kraftfahrzeugs dienenden Rastnase eine Durchbrechung aufweist, die nicht von der Lüftungsklappe in deren Geschlossenstellung abgedeckt wird. Bei der neuen Zwangsentlüftung ist es dann vorgesehen, diese Durchbrechung permanent mit einer einstückig mit der Lüftungsklappe an den Rahmen angespritzten Haube aus dem Elastomerwerkstoff abzudichten. Die Abdichtung ist somit zuverlässig und nach einmaliger Einrichtung des Werkzeugs ohne zusätzlichen Aufwand möglich.

Wenn bei der neuen Zwangsentlüftung eine um die Öffnung umlaufende und axial zu der Öffnung ausgerichtete Dichtlippe auf der der Lüftungsklappe gegenüberliegenden Seite an den Rahmen angespritzt ist, ist es mit Vorteilen verbunden, wenn sich der Querschnitt der Dichtlippe vom Rahmen weg, aber nur auf der der Öffnung zugewandten Seite der Dichtlippe verjüngt. Der Querschnitt der von dem Rahmen abstehende Dichtlippe wird außen also durch eine senkrecht zum Rahmen verlaufende Linie begrenzt, während sich die innere Begrenzungslinie nach außen neigt. Dabei kann die innere Begrenzungslinie kurvenförmig, d. h. kreisbogenabschnittförmig mit gegenüber dem Rahmen nach oben zunehmender Neigung vorgesehen sein. Diese Ausbildung der Dichtlippe hat den Vorteil, daß die Dichtlippe beim Andrücken in ihrer Haupterstreckungsrichtung an eine senkrecht zur Andrückrichtung verlaufende Fläche definiert um ein geringes Maß nach außen aufbiegt und durch diese definierte Verformung sowohl eine zuverlässige Abdichtung bewirkt als auch den Rahmen mit einer definierten Kraft an Anschlagflächen andrückt, die rahmenseitig typischerweise an Rastnasen vorgesehen sind.

Ein Verfahren zur Herstellung der neuen Zwangsentlüftung ist erfindungsgemäß dadurch gekennzeichnet, daß die Lüftungsklappe in einer Offenstellung an den Rahmen angespritzt wird, wobei der Elastomerwerkstoff von dem freien Ende der Lüftungsklappe bis in einen Kontaktbereich mit dem Rahmen gepreßt wird. Die Einspritzrichtung der Lüftungsklappe von deren freien Ende her ist bedeutend, um eine ebene Lüftungsklappe zu erhalten.

Dies gilt insbesondere, wenn der Elastomerwerkstoff unter einer vor dem Kontaktbereich angeordneten und dem Rahmen abgewandten Barriere hindurchgepreßt wird. Diese Barriere entspricht der Nut in der fertigen Lüftungsklappe. Bei dem Hindurchpressen des Elastomerwerkstoffs unter der Barriere werden Anisotropien in dem Elastomerwerkstoff hervorgerufen, die trotz des Anspritzens der Lüftungsklappe in einer Offenstellung zu der gewünschten, die Lüftungsklappe in ihre Geschlossenstellung beaufschlagenden elastischen Rückstellkraft kommt. Diese Rückstellkraft wird mit dem Abkühlen des die Lüftungsklappe ausbildenden Elastomerwerkstoffs aufgebaut.

Zur Erzielung der hier gezielt ausgenutzten Anisotropien im nötigen Umfang ist der Querschnitt der Barriere vorzugsweise kantig begrenzt und insbesondere rechteckig oder trapezförmig ausgebildet. Auch bei einer rechteckigen Barriere ist der Querschnitt der auf die Barriere zurückzuführenden Nut in der Lüftungsklappe trapezförmig, wenn die Nut in der Geschlossenstellung der Lüftungsklappe betrachtet wird, da auch eine rechteckige Barriere nur für die Offenstellung, in der die Lüftungsklappe an den Rahmen angespritzt wird, eine Nut mit rechteckigem Querschnitt ergibt.

In der bevorzugten Ausführungsform des neuen Verfahrens zur Herstellung der Zwangsentlüftung wird der Rahmen in dem ersten Kaliber eines Spritzwerkzeugs mit zwei Kalibern gespritzt. Anschließend wird der Rahmen in das zweite Kaliber umgesetzt und dann die Lüftungsklappe in dem zweiten Kaliber an den Rahmen angespritzt. Beim Anspritzen der Lüftungsklappe ist in dem geschlossenen Werkzeug eine keilförmige Trennplatte zwischen dem Rahmen und dem Freiraum für die Lüftungsklappe vorgesehen. Unterhalb dieser Trennplatte ist der Rahmen angeordnet, soweit er später von der Lüftungsklappe abgedeckt wird. Oberhalb der Trennplatte entsteht die Lüftungsklappe durch Einpressen von Elastomerwerkstoff in den Freiraum. Typischerweise weist die keilförmige Trennplatte einen Öffnungswinkel von 20 ° auf. Dies entspricht dem Winkel, um den die Lüftungsklappe durch die gezielt aufgebauten Anisotropiekräfte in dem Elastomerwerkstoff nach dem Entnehmen aus dem Werkzeug in ihre Geschlossenstellung beaufschlagt wird.

Eine auf der der Lüftungsklappe gegenüber liegenden Seite des Rahmens vorgesehene Dichtlippe wird bei dem neuen Verfahren gleichzeitig mit der Lüftungsklappe an den Rahmen angespritzt, d. h. vorzugsweise in dem zweiten Kaliber des bereits angesprochenen Werkzeugs.

Die Erfindung wird im folgenden anhand eines Ausführungsbeispiels näher erläutert und beschrieben, dabei zeigt
- Figur 1: die Zwangsentlüftung in einer Ansicht von vorne, d. h. von außerhalb des Kraftfahrzeugs,
- Figur 2: eine Seitenansicht der Zwangsentlüftung,
- Figur 3: einen senkrechten Schnitt durch die in eine Fahrzeugwand eingesetzte Lüftungsklappe gemäß den Figuren 1 und 2,
- Figur 4: einen Schnitt durch eine Nut in einer Lüftungsklappe der Zwangsentlüftung gemäß den Figuren 1 bis 3,
- Figur 5: eine Figur 1 entsprechende Ansicht der hier separat dargestellten Lüftungsklappe,
- Figur 6: einen Schnitt durch ein Detail der Zwangsentlüftung gemäß den Figuren 1 bis 5 und
- Figur 7: ein Werkzeug zum Anspritzen der Lüftungsklappe an den Rahmen der Zwangsentlüftung gemäß den Figuren 1 bis 6.

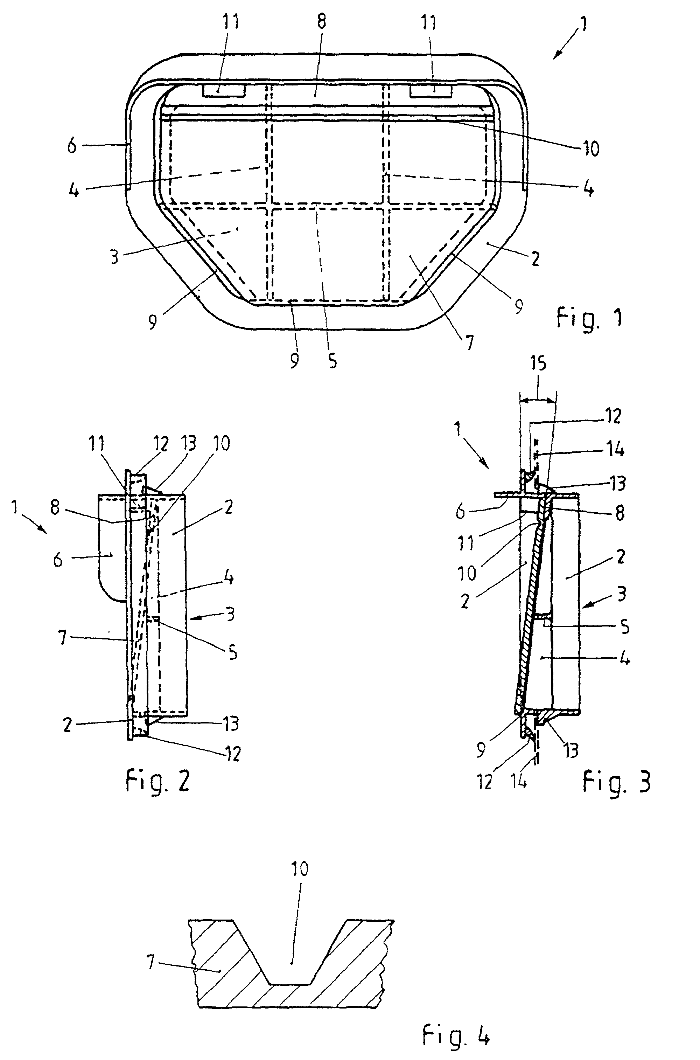

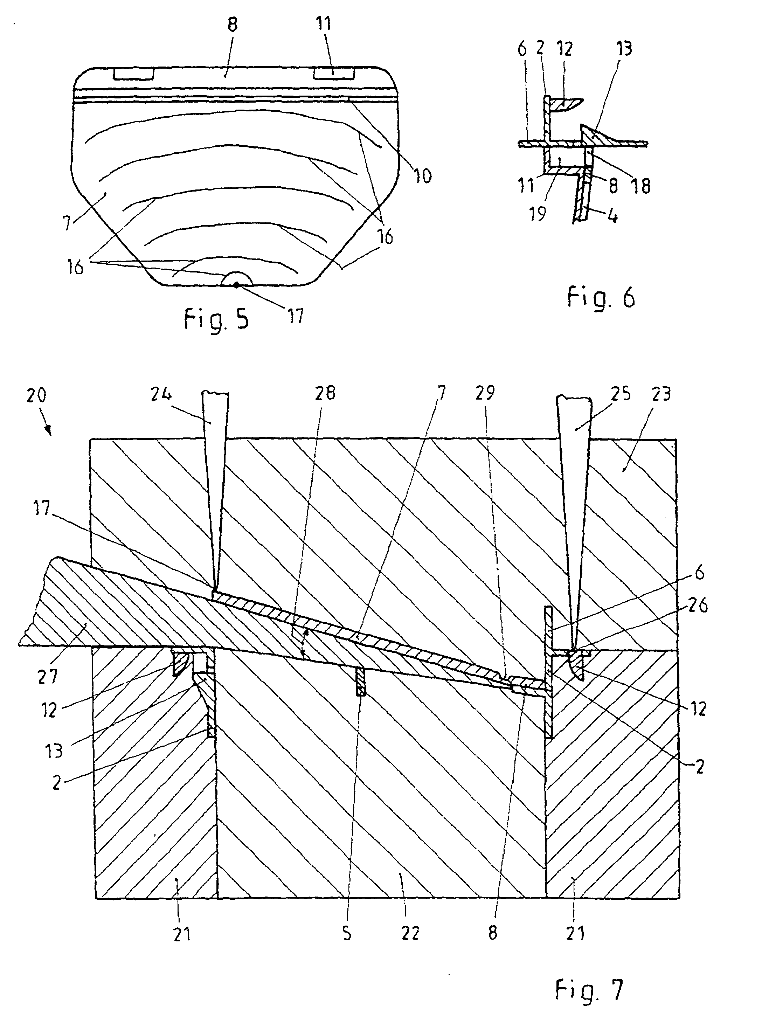

Die in Figur 1 dargestellte Zwangsentlüftung 1 weist einen Rahmen 2 auf, der eine Öffnung 3 begrenzt. Die Öffnung 3 ist durch zwei senkrechte Streben 4 und eine waagerechte Strebe 5 unterteilt. Die Streben 4 und 5 sind einstückig mit den Rahmen 2 aus einem harten Kunststoff gespritzt. Dieser harte Kunststoff bildet auch einen bogenförmigen und vordachartigen Vorsprung 6 aus. Unterhalb des Vorsprungs 6 und die Öffnung 3 in ihrer dargestellten Geschlossenstellung verschließend ist eine Lüftungsklappe 7 vorgesehen. Die Lüftungsklappe 7 besteht aus einem Elastomerwerkstoff und ist an den Rahmen 2 angespritzt, wobei ein Kontaktbereich 8 ausgebildet ist. Von dem Kontaktbereich 8 hängt die Lüftungsklappe 7 herab und liegt dabei auf den Streben 4 und 5 und über Anlageflächen 9 an dem Rahmen 2 an. Unterhalb des Kontaktbereichs 8 ist in der Lüftungsklappe 7 eine Nut 10 vorgesehen, die die Lüftungsklappe 7 schwächt und damit eine Klappachse zum Aufklappen der Lüftungsklappe aus ihrer dargestellten Geschlossenstellung in verschiedene Offenstellungen definiert. Innerhalb des Kontaktbereichs 8 bildet der an den Rahmen 2 angespritzte Elastomerwerkstoff zwei Hauben 11 aus, die in Zusammenhang mit Figur 6 näher beschrieben werden.

In Figur 2 ist die Zwangsentlüftung 1 genäß Figur 1 in der Seitenansicht dargestellt. Hierbei ist zusätzlich zu den bereits aus Figur 1 entnehmbaren Details die Anordnung einer umlaufenden Dichtlippe 12 an der der Lüftungsklappe 7 abgewandten Rückseite des Rahmens 2 zu erkennen. Weiterhin sind Rastnasen 13 ersichtlich, die zur Verankerung der Zwangsentlüftung 1 in einer Durchbrechung einer in Figur 2 nicht dargestellten Karosseriewand dienen. Bei dieser Verankerung spielt die dargestellte Querschnittsform der Dichtlippe 12 eine besondere Bedeutung. Der Querschnitt der Dichtlippe 12 nimmt mit zunehmendem Abstand zum Rahmen 2 ab, aber nur auf der Innenseite, während die Außenseite geradlinig und senkrecht zum Rahmen 2 begrenzt ist. Dies führt zu einer gezielten Verformung der Dichtlippe 12, wie sie aus Figur 3 hervorgeht, die einen senkrechten Schnitt durch die in eine Karosseriewand 14 eingebauten Zwangsentlüftung 1 zeigt. Dabei verformt sich die Dichtlippe 2 durch Umbiegen nach außen. Diese Umbiegungsrichtung bewirkt eine vollständige Dichtheit zwischen dem Rahmen 2 und der Karosseriewand 14 bei einer Druckbeaufschlagung in der Richtung, in der auch die Lüftungsklappe 7 durch eine Druckdifferenz in ihrer dargestellten Geschlossenstellung gehalten wird. Bei einer Druckbeaufschlagung in umgekehrter Richtung ist die Dichtheit zwischen dem Rahmen 2 und der Karosseriewand 14 belanglos, da sich dann die Lüftungsklappe 7 sofort um die von der Nut 10 definierte Klappachse aufklappend in eine Offenstellung bewegt. Zurück in die dargestellte Geschlossenstellung wird die Lüftungsklappe 7 sowohl von einer elastischen Rückstellkraft des die Lüftungsklappe 7 ausbildenden Elastomerwerkstoffs als auch durch ihre um die Klappachse wirkende Gewichtskraft beaufschlagt. Zur Ausnutzung der Gewichtskraft ist die Lüftungsklappe 7 in ihrer Geschlossenstellung um einen Kippwinkel 15 von 14 ° aus der Vertikalen verkippt, wobei sie auf den Streben 4 und 5 und über die Anlageflächen 9 an dem Rahmen 2 aufliegt.

Figur 4 zeigt die Nut 10 in der Lüftungsklappe 4 in einem vergrößerten Schnitt. Tatsächlich ist die Lüftungsklappe 7 knapp 2 mm dick und die Nut gut 1,5 mm tief, so daß am Grund der Nut eine Restdicke der Lüftungsklappe 7 von etwa 0,5 mm verbleibt. Die Nut 10 weist einen trapezförmigen Querschnitt auf, wenn sich die Lüftungsklappe 7 in ihrer Geschlossenstellung befindet. Beim Öffnen der Lüftungsklappe 7 verformt sich die Nut 10 zunächst zu einem Rechteck und anschließend noch einmal etwa zu einem Trapez, bei dem sich die Basis im Gegensatz zu Figur 4 jedoch unten befindet.

Figur 5 zeigt eine Draufsicht auf die Lüftungsklappe 7, die bereits Bestandteil von Figur 1 ist. In Figur 5 sind zusätzlich Schlieren 16 eingezeichnet, die wellenartig von einem Anspritzpunkt 17 ausgehen und ebenso wie der Anspritzpunkt an dem Elastomerwerkstoff der Lüftungsklappe 7 tatsächlich sichtbar sind. Die Schlieren 16 lassen erkennen, daß die Lüftungsklappe 7 von dem am freien Ende der Lüftungsklappe 7 angeordneten Anspritzpunkt 17 ausgehend gespritzt ist. Dabei wurde der Elastomerwerkstoff durch den Bereich der Nut 10 bis in den Kontaktbereich 8 gepreßt. Das Spritzen der Lüftungsklappe 7 von ihrem freien Ende her ist Voraussetzung dafür, daß die fertige Lüftungsklappe 7 eine möglichst ebene Gestalt hat.

Figur 6 erläutert die Funktion der bereits erwähnten Hauben 11 aus dem Elastomerwerkstoff. Die Hauben 11 decken Durchbrechungen 18 in dem Rahmen 2 in dem Bereich der oberen Rastnasen 13 ab. Die Durchbrechungen 18 sind erforderlich, damit die Rastnasen 13 frei einfedern können. Beim Anspritzen des Elastomerwerkstoffs für die Hauben 11 füllt ein Vorsprung des Spritzwerkzeugs die Durchbrechungen 18 und den darüber befindlichen Freiraum 19 aus, um die Anlageflächen für den Elastomerwerkstoff zur Ausbildung der Haube 11 bereitzustellen.

Figur 7 zeigt das zweite Kaliber eines Spritzwerkzeugs 20. In dem ersten hier nicht dargestellten Kaliber wird der Rahmen 2 aus dem harten Kunststoff gespritzt. In dem zweiten Kaliber des Spritzwerkzeugs 20 gemäß Figur 7 wird die Lüftungsklappe 7 zusammen mit den hier nicht sichtbaren Hauben 11 und die Dichtungslippe 12 an den Rahmen 2 angespritzt. Dabei besteht das Spritzwerkzeug 20 aus einer zweiteilig gehaltenen Unterform 21, 22, um die Entnahme der fertigen Zwangsentlüftung aus dem Spritzwerkzeug 20 zu erleichtern, indem die Teile 21 und 22 relativ zueinander verfahren werden. In einer Oberform 23 sind zwei Spritzkanäle 24 und 25 vorgesehen. Der Spritzkanal 24 führt zu dem Anspritzpunkt 17 gemäß Figur 5, der Spritzkanal 25 zu einem Anspritzpunkt 26 für die Dichtlippe 12. Zwischen der Unterform und der Oberform ist eine keilförmige Trennplatte 27 vorgesehen, die einen Öffnungswinkel 28 von etwa 20° aufweist. Die Trennplatte 27 trennt den Rahmen 2 außerhalb des Kontaktbereichs 8 von der Lüftungsklappe 7, um eine unerwünschte Verbindung der Lüftungsklappe 7 mit dem Rahmen 2 zu verhindern. Zwar befindet sich die Lüftungsklappe 7 beim Anspritzen an den Rahmen 2 so in einer Offenstellung, doch wird durch die Wahl des Anspritzpunkts 17 und eine Barriere 29 an der Oberform 23 gezielt eine Anisotropie in dem für die Lüftungsklappe 7 angespritzten Elastomerwerkstoff hervorgerufen, so daß beim Auskühlen des Elastomerwerkstoffs eine Rückstellkraft entsteht, die die Lüftungsklappe 7 auch ohne Berücksichtigung ihrer Gewichtskraft in ihre Geschlossenstellung überführt. Die Barriere 29 ist kantig begrenzt und weist einen rechteckigen oder trapezförmigen Querschnitt auf, wobei die Basis des Trapezes der Lüftungsklappe 7 abgewandt ist. Aus der Barriere 29 resultiert die Nut 10 in der Lüftungsklappe 7. Beim Hindurchtreten des Elastomerwerkstoffs unter der Barriere 29 wird dessen Strömung durch die Kanten der Barriere 29 so beeinflußt, daß die beschriebene Rückstellkraft nach dem Abkühlen des Elastomerwerkstoffs auftritt. Die Dichtlippe 12 wird durch den Rahmen 2 hindurch gespritzt, damit beide Spritzkanäle 24 und 25 in der Oberform vorgesehen sein können.

Geeignete Materialien für den harten Kunststoff des Rahmens ist Polyethylen oder Polypropylen. Bei dem Elastomerwerkstoff für die Lüftungsklappe 7 handelt es sich um einen thermoplastischen Elastomerwerkstoff, d. h. um ein sogenannten TPE (thermoplastisches Elastomer). Konkret kann es sich um ein EPDM-Elastomer oder einen Kautschuk handeln.

### BEZUGSZEICHENLISTE

- 1 -: Zwangsentlüftung
- 2 -: Rahmen
- 3 -: Öffnung
- 4 -: Strebe
- 5 -: Strebe
- 6 -: Vorsprung
- 7 -: Lüftungsklappe
- 8 -: Kontaktbereich
- 9 -: Anlagefläche
- 10 -: Nut

- 11 -: Haube
- 12 -: Dichtlippe
- 13 -: Rastnase
- 14 -: Karosseriewand
- 15 -: Kippwinkel
- 16 -: Schliere
- 17 -: Anspritzpunkt
- 18 -: Durchbrechung
- 19 -: Freiraum
- 20 -: Spritzwerkzeug

- 21 -: Teil der Unterform
- 22 -: Teil der Unterform
- 23 -: Oberform
- 24 -: Anspritzkanal
- 25 -: Anspritzkanal
- 26 -: Anspritzpunkt
- 27 -: Trennplatte
- 28 -: Öffnungswinkel
- 29 -: Barriere

## Patentansprüche

1. Verfahren zur Herstellung einer Zwangsentlüftung (1) für den Druckausgleich zwischen dem Innenraum und der Umgebung eines Kraftfahrzeugs, mit einem eine Öffnung (3) begrenzenden Rahmen (2) aus einem harten Kunststoff und einer an den Rahmen (2) angespritzten, ebenen Lüftungsklappe (7) aus einem Elastomerwerkstoff, wobei eine elastische Rückstellkraft einem Öffnen der Lüftungsklappe (7) aus einer Geschlossenstellung entgegenwirkt, in der die Lüftungsklappe (7) an dem Rahmen (2) anliegt und die Öffnung (3) in dem Rahmen (2) verschließt, **dadurch gekennzeichnet, daß** die Lüftungsklappe (7) in einer Offenstellung an den Rahmen (2) angespritzt wird, wobei der Elastomerwerkstoff von dem freien Ende der Lüftungsklappe (7) bis in einen Kontaktbereich (8) mit dem Rahmen (2) gepreßt wird.

2. Verfahren nach Anspruch 1, **dadurch gekennzeichnet, daß** der Elastomerwerkstoff unter einer vor den Kontaktbereich (8) angeordneten und dem Rahmen (2) abgewandten Barriere (29) hindurchgepreßt wird.

3. Verfahren nach Anspruch 2, **dadurch gekennzeichnet, daß** der Querschnitt der Barriere (29) rechteckig oder trapezförmig ausgebildet ist.

4. Verfahren nach einem der Ansprüche 1 bis 3, **dadurch gekennzeichnet, daß** der Rahmen in dem ersten Kaliber eines Spritzwerkzeugs (20) mit zwei Kalibern gespritzt wird, daß der Rahmen dann in das zweite Kaliber umgesetzt wird und daß dann die Lüftungsklappe (7) in dem zweiten Kaliber an den Rahmen (2) angespritzt wir, wobei in dem geschlossenen Spritzwerkzeug (20) eine keilförmige Trennplatte (27) zwischen dem Rahmen (2) und dem Freiraum für die Lüftungsklappe (7) vorgesehen ist.

5. Verfahren nach einem der Ansprüche 1 bis 4, **dadurch gekennzeichnet, daß** eine Dichtlippe (12) auf der der Lüftungsklappe (7) gegenüberliegenden Seite des Rahmens (2) gleichzeitig mit der Lüftungsklappe (7) an den Rahmen (2) angespritzt wird.

6. Zwangsentlüftung für den Druckausgleich zwischen dem Innenraum und der Umgebung eines Kraftfahrzeugs, mit einem eine Öffnung (3) begrenzenden Rahmen (2) aus einem harten Kunststoff und einer an den Rahmen (2) angespritzten, ebenen Lüftungsklappe (7) aus einem Elastomerwerkstoff, wobei eine elastische Rückstellkraft einem Öffnen der Lüftungsklappe (7) aus einer Geschlossenstellung entgegenwirkt, in der die Lüftungsklappe an dem Rahmen anliegt und die Öffnung in dem Rahmen verschließt, **dadurch gekennzeichnet, daß** die von dem Rahmen begrenzte Öffnung (3) durch senkrechte Streben (4) unterteilt ist, die einstückig mit dem Rahmen (2) aus dem harten Kunststoff gespritzt sind.

7. Zwangsentlüftung nach Anspruch 6, **dadurch gekennzeichnet, daß** die Lüftungsklappe (7) eine parallel zu dem Kontaktbereich (8) mit dem Rahmen (2) verlaufende Nut (10) aufweist, die sich über die gesamte Breite der Lüftungsklappe (7) erstreckt.

8. Zwangsentlüftung nach Anspruch 6 oder 7, **dadurch gekennzeichnet, daß** die Dicke der Lüftungsklappe (7) 1,0 bis 2,5 mm beträgt.

9. Zwangsentlüftung nach Anspruch 8 rückbezogen auf Anspruch 7, **dadurch gekennzeichnet, daß** die Restdicke der Lüftungsklappe am Grund der Nut (10) 0,3 bis 0,8 mm beträgt.

10. Zwangsentlüftung nach einem der Ansprüche 6 bis 9, **dadurch gekennzeichnet, daß** die Lüftungsklappe (7) in der Geschlossenstellung um einen Kippwinkel (15) von 5 bis 20 ° aus der Vertikalen verkippt ist und von dem Kontaktbereich (8) an dem Rahmen (2) herabhängend auf Streben (4 und 5) aufliegt, die als Bestandteile des Rahmens (2) die Öffnung (3) unterteilen.

11. Zwangsentlüftung nach einem der Ansprüche 6 bis 10, **dadurch gekennzeichnet, daß** der Rahmen (2) im Bereich mindestens einer zur Verankerung des Rahmens (2) an der Karosserie des Kraftfahrzeugs dienenden Rastnase (13) eine Durchbrechung (18) aufweist, die nicht von der Lüftungsklappe (7) in deren Geschlossenstellung abgedeckt wird, die aber permanent mit einer einstückig mit der Lüftungsklappe (7) an den Rahmen (2) angespritzen Haube (11) aus dem Elastomerwerkstoff abgedichtet ist.

12. Zwangsentlüftung nach einem der Ansprüche 6 bis 11, **dadurch gekennzeichnet, daß** eine um die Öffnung (3) umlaufende und axial zu der Öffnung (3) ausgerichtete Dichtlippe (12) auf der der Lüftungsklappe (7) gegenüberliegenden Seite an den Rahmen (2) angespritzt ist und daß sich der Querschnitt der Dichtlippe (12) vom Rahmen (2) weg, aber nur auf der der Öffnung (3) zugewandten Seite der Dichtlippe (12) verjüngt.

## Claims

1. A method for making a forced ventilation system (1) for equalizing the pressure between the passenger compartment and surroundings of a motor vehicle, the system comprising a frame (2) made of hard plastics and delimiting an aperture (3), and a flat ventilation flap (7) made of an elastomer material and injection-moulded to the frame, a resilient restoring force counteracting the opening of the ventilation flap (7) from a closed position in which the ventilation flap (7) rests on the frame (2) and closes the aperture (3) in the frame (2), **characterized in that** the ventilation flap (7) is injection-moulded to the frame (2) in an opened position, the elastomer material being pressed from the free end of the ventilation flap (7) into a contact area (8) with the frame (2).

2. The method according to claim 1 **characterized in that** the elastomer material is pressed underneath and beyond a barrier (29) located in front of the contact area (8) and opposing the frame (2).

3. The method according to claim 2 **characterized in that** the cross section of the barrier (29) is shaped rectangular or trapezoid.

4. The method according to any of the claims 8 to 10 **characterized in that** the frame is injection-moulded in a first caliber of an injection-mould (20) having two calibers, **in that** the frame is then moved into the second caliber, and **in that** the ventilation flap (7) is then injection-moulded to the frame (2) within the second caliber, a wedge-shaped separation plate (27) being provided in the closed injection-mould (20) between the frame (2) and the free space for the ventilation flap (7).

5. The method according to any of the claims 1 to 4 **characterized in that,** at the same time as the ventilation flap, (7) a sealing lip (12) is injection-moulded to the frame (2) at the side of the frame (2) opposite to the ventilation flap (7).

6. A forced ventilation system for equalizing the pressure between the passenger compartment and surroundings of a motor vehicle, the system comprising a frame (2) made of hard plastics and delimiting an aperture (3) and a flat ventilation flap (7) made of an elastomer material and injection-moulded to the frame (2), a resilient restoring force counteracting the opening of the ventilation flap (7) from a closed position in which the ventilation flap (7) rests on the frame (2) and closes the aperture (3) in the frame (2), **characterized in that** the aperture (3) delimited by the frame is subdivided by vertical braces (4) which are injection-moulded as one part with the frame (2) of the hard plastics.

7. The forced ventilation system according to claim 6 **characterized in that** the ventilation flap (7) has a groove (10) running parallel to the contact area (8) with the frame (2), the groove (10) extending over the whole widths of the ventilation flap (7).

8. The forced ventilation system according to claim 6 or 7 **characterized in that** the thickness of the ventilation flap (7) is 1.0 to 2.5 mm.

9. The forced ventilation system according to claim 8 being dependent of claim 7 **characterized in that** the remaining thickness of the ventilation flap at the base of the groove (10) is 0.3 to 0.8 mm.

10. The forced ventilation system according to any of the claims 6 to 9 **characterized in that** the ventilation flap (7) in its closed position is tilted by a tilting angle (15) of 5 to 20° out of a vertical direction, and rests, suspending from the contact area (8) at the frame (2), on braces (4 and 5) which, as parts of the frame (2), subdivide the aperture (3).

11. The forced ventilation system according to any of the claims 6 to 10 **characterized in that** the frame (2), in the area of at least one clip-in nose (13) serving for securing the frame (2) to the body of the motor vehicle, has an opening (18) which is not covered by the ventilation flap in its closed position but which is permanently sealed by a hoot (11) of the elastomer material injection-moulded to the frame (2) in one part with the ventilation flap (7).

12. The forced ventilation system according to any of the claims 6 to 11 **characterized in that** a sealing lip (12), which runs loop-shaped around the aperture (3) and which is oriented axially to the aperture (3), is injection-moulded to the frame (2) at the side opposite to the ventilation flap (7), and **in that** the cross section of the sealing lip (12) decreases in a direction away from the frame (2) but on the side of the sealing lip (12) facing the aperture (3) only.

## Revendications

1. Procédé de réalisation d'un système de ventilation forcée (1) pour l'équilibrage de la pression entre le volume intérieur et le milieu ambiant d'un véhicule automobile, avec un cadre (2) délimitant une ouverture (3), en une matière plastique dure, et un clapet d'aération (7) plan, moulé par injection sur le cadre (2), en une matière élastomère, une force de rappel élastique s'opposant à une ouverture du clapet d'aération (7) dans une position fermée, dans laquelle le clapet d'aération (7) s'applique contre le cadre (2), et ferme l'ouverture (3) dans le cadre (2), **caractérisé en ce que** le clapet d'aération (7) dans une position ouverte est moulé par injection sur le cadre (2); le matériau élastomère étant pressé par l'extrérnité libre du clapet d'aération (7) jusque dans une zone de contact (8) avec le cadre (2).

2. Procédé selon la revendication 1, **caractérisé en ce que** le matériau élastomère est pressé sous une barrière (29) disposée devant la zone de contact (8) et tournée à l'opposé du cadre (2).

3. Procédé selon la revendication 2, **caractérisé en ce que** la section transversale de la barrière (29) est de forme rectangulaire ou trapézoïdale.

4. Procédé selon l'une des revendications 1 à 3, **caractérisé en ce que** le cadre est injecté dans le premier calibre d'un outil d'injection (20) comportant deux calibres, **en ce que** le cadre est transféré ensuite dans le deuxième calibre et **en ce qu'**alors le clapet d'aération (7) est injecté, dans le deuxième calibre, sur le cadre (2), une plaque de séparation (27) cunéiforme étant prévue entre le cadre (2) et l'espace laissé libre pour le clapet d'aération (7), dans l'outil d'injection (20) fermé.

5. Procédé selon l'une des revendications 1 à 4, **caractérisé en ce qu'**une lèvre d'étanchéité (12) est injectée sur le cadre (2), sur le côté du cadre (2) opposé au clapet d'aération (7), en même temps que le clapet d'aération (7).

6. Système de ventilation forcée pour l'équilibrage de la pression entre le volume intérieur et le milieu ambiant d'un véhicule automobile, avec un cadre (2) délimitant une ouverture (3), en une matière plastique dure, et un clapet d'aération (7) plan, moulé par injection sur le cadre (2), en une matière élastomère, une force de rappel élastique s'opposant à une ouverture du clapet d'aération (7) dans une position fermée, dans laquelle le clapet d'aération s'applique contre le cadre, et ferme l'ouverture dans le cadre, **caractérisé en ce que** l'ouverture (3) délimitée par le cadre est partagée par des entretoises (4) verticales qui sont injectées d'une seule pièce avec le cadre (2) constitué de la matière plastique dure.

7. Système de ventilation forcée selon la revendication 6, **caractérisé en ce que** le clapet d'aération (7) présente une rainure (10), s'étendant parallèlement à la zone de contact (8) avec le cadre (2), qui s'étend sur toute la largeur du clapet d'aération (7).

8. Système de ventilation forcée selon la revendication 6 ou 7, **caractérisé en ce que** l'épaisseur de clapet d'aération (7) est comprise entre 1,0 et 2,5 mm.

9. Système de ventilation forcée selon la revendication 8 en référence à la revendication 7, **caractérisé en ce que** l'épaisseur résiduelle du clapet d'aération au fond de la rainure (10) est comprise entre 0,3 et 0,8 mm.

10. Système de ventilation forcée selon l'une des revendications 6 à 9, **caractérisé en ce que** le clapet d'aération (7) en position fermée est basculé d'un angle de basculement de 5 à 20°, depuis la verticale, et, pendant de la zone de contact (8) du cadre (2), il repose sur des entretoises (4 et 5) qui, en tant que parties constitutives du cadre (2), divisent l'ouverture (3).

11. Système de ventilation forcée selon l'une des revendications 6 à 10, **caractérisé en ce que** dans la zone d'au moins un ergot d'arrêt (13), servant à l'ancrage du cadre (2) sur la carrosserie du véhicule automobile, le cadre (2) présente un ajour (18) qui n'est pas recouvert par le clapet d'aération (7) dans sa position fermée, mais qui est constamment rendu étanche au moyen d'un capot (11) en matériau élastomère, moulé par injection d'une seule pièce avec le clapet d'aération (7), sur le cadre (2).

12. Système de ventilation forcée selon l'une des revendications 6 à 11, **caractérisé en ce qu'**une lèvre d'étanchéité (12), entourant l'ouverture (3) et orientée axialement vers l'ouverture (3), est moulée par injection sur le côté du cadre (2) opposé au clapet d'aération (7), et **en ce que** la section transversale de la lèvre d'étanchéité (12) se rétrécit à partir du cadre (2), mais uniquement sur le côté de la lèvre d'étanchéité (12) tourné vers l'ouverture (3).
